# EUROPEAN PATENT APPLICATION

(11) **EP 3 842 330 A1**
(43) Date of publication of application: **30.06.2021**
(21) Application number: 19851682.5
(22) Date of filing: 21.08.2019
(51) Int. Cl.: B62M 1/12, A61G 5/02, B62K 5/00

(54) **SELF-TRAVELING VEHICLE**

(30) Priority: 22.08.2018 JP 2018155245
(71) Applicant: Matsui, Keisuke, Katano-shi, Osaka 576-0052 (JP)
(72) Inventor: MATSUI, Hiromi, Katano-shi Osaka 576-0052 (JP)
(74) Representative: Cabinet Chaillot
(86) International application number: PCT/JP2019/032630
(87) International publication number: WO 2020/040194

(57) **Abstract**

A self-propelling vehicle 1 comprises a seat 2, a leg-driving unit 3 and a hand-driving unit 4. The leg-driving unit 3 comprises a wave-shaped board 32 that is formed with the feet-pressing part 31 and slides back and forth according to the driver's pressing on the feet-driving part 31, and that has wave-shaped parts 32a on a bottom surface; and a first gear 33 that rotates on a rolling shaft, and that rolls according to a slide movement of the wave-shaped board 32 back and forth by engaging the first gear 33 with the wave-shaped parts 32a. With this configuration, the self-propelling vehicle 1, with which even disabled people who require a wheelchair and elderlies can enjoy driving by themselves, can achieve higher speed than conventional vehicles.

## Description

### Field of the Invention

This invention relates to a self-propelling vehicle, which can be driven by using power from the driver hands and legs.

### Description of the Related Art

Conventionally, vehicles that give us exercise by using hands and legs like rowing with a paddle back and forth, such as in a boat, are known. In addition, self-propelling vehicles, which can be driven by physically disabled persons while using a part of their hands and legs, are also known.

For example, a land rowing vehicle, that transmits the driving force to the wheel set by making use of leg force, is disclosed (refer to Patent Reference 1). This land rowing vehicle gains the driving force by pulling the drive lever like rowing, while sitting on a chair and putting your foot on the foothold. In addition, a wheelchair with a ratchet function is also disclosed (refer to Patent Reference 2). This wheelchair can realize running by applying the mechanism of the ratchet mechanism and enables the wheelchair to run back and forth in a comfortable posture.

Patent Reference 1: Japanese Laid-Open Patent Application No. 2008-500236 Publication
Patent Reference 2: Japanese Laid-Open Patent Application No. 2004-267610 Publication **BRIEF SUMMARY OF THE INVENTION**

However, it is hard to say that such a conventional self-propelling vehicle using hands and legs can utilize power from the hands and legs effectively. Therefore, it's still required more improvements such as a lack of speed in a case when the vehicle can be used for transportation purposes.

In addition, it is preferable for such self-propelling vehicles to be presented not only for a person without any disability but also for people with hands and leg disability, elderly people, and so on.

The present invention has been made in view of the above-mentioned problems and has an objective to provide a self-propelling vehicle, with which even disabled people who require a wheelchair and elderlies can enjoy driving by themselves, and that can achieve higher speed than conventional vehicles.

### Disclosure of Invention

In order to solve the abovementioned issues, the present invention is a self-propelling vehicle, which comprises a seat for a driver, a leg-driving unit to be driven by the driver's leg force, and a hand-driving unit to make the self-propelling vehicle move by the driver's hand force, wherein the leg-driving unit comprising: a feet-pressing part that is pressed by the driver; a wave-shaped board that is formed with the feet-pressing part and slides back and forth according to the driver's pressing on the feet-driving part, and that has wave-shaped parts on a bottom surface; a first gear that rotates on a rolling shaft, and that rolls according to a slide movement of the wave-shaped board back and forth by engaging the first gear with the wave-shaped parts; and a first driving unit that connects the first gear with a driving shaft of a rare wheel via a gearbox, which stores a ratchet and a sprocket, and that shifts the back and forth movement of the wave-shaped board into one-way rolling movement by utilizing the ratchet inside the gearbox and make the driving shaft roll in one direction, wherein the hand-driving unit comprising: a hand-driving lever whose lower parts are attached to the rolling shaft of the first gear, and that rotates around the rolling shaft; the first gear that rotates along with the movement of the hand-driving lever; and the first driving unit, the self-propelling vehicle, preferably, further comprising: a box body that has an open surface, and that stores the seat, the leg-driving unit, and the hand-driving unit, wherein the wave-shaped board has a convex part which protrudes to the left and right side, wherein each side of the box body forms each opening, each of which has a slit-shaped opening, and the back and forth side of the wave-shaped board pass and move through the opening, and the convex parts of the wave-shaped board move and pass through the opening to make the wave-shaped board slide back and forth.

In this self-propelling vehicle, preferably, wherein the rear side of the wave-shaped board is connected to an elastic part that pulls the wave-shaped board to move backwardly.

In this self-propelling vehicle, preferably, wherein the left and right side opening comprises a bearing structure, which makes the wave-shaped board slide smoothly.

In this self-propelling vehicle, preferably, wherein the hand-driving lever comprises a horizontal bar having a grasping part and a vertical arm connected to the left or right side of the horizontal bar rotatably, wherein the lower side of the vertical arm is connected to the rolling shaft, wherein the wave-shaped board has a slit part extending along a back and forth direction to make the vertical arm of the hand-driving lever pass through the wave-shaped board.

In this self-propelling vehicle, preferably, wherein the ratchet is located at the lower side of the vertical arm and is set to have free movement along the rolling direction of the rolling shaft.

In this self-propelling vehicle, preferably, further comprising: a steering wheel that is connected to front wheels, and that operates the self-propelling vehicle going straight or changing directions.

In this self-propelling vehicle, preferably, further comprising: an internal transmission, which is located between the gearbox and the driving shaft, that controls a transmission of the driving force.

In this self-propelling vehicle, preferably, wherein the legs of the seat for the driver to sit is penetrating through the slit part.

In order to solve the abovementioned issues, the present invention is a self-propelling vehicle which comprises a seat for a driver and a hand-and-leg driving unit to make the self-propelling vehicle move by the driver's hand and leg forces, wherein the hand-and-leg driving unit comprising: a feet-pressing part that is pressed by the driver; a hand-driving lever that transmits force by hands; a wave-shaped board that slides back and forth according to the driver's pressing operation onto the feet-pressing part and pulling operation on the hand-driving lever, and that has wave-shaped parts on a bottom surface; a first rope where one side of the first rope is connected to the feet-pressing part and the other side of the first rope is connected to a rear part of the wave-shaped board via a first pulley situated at the backside of the wave-shaped board; a second rope where one side of the second rope is connected to the hand-driving lever and the other side of the second rope is connected to a front part of the wave-shaped board via a second pulley situated at the front side of the wave-shaped board; a leg rope housing board that is another part of the wave-shaped board, and that has an inner space to store the first rope; a first gear that rotates on a rolling shaft, and that rolls according to a slide movement of the wave-shaped board back and forth by engaging with the wave-shaped parts; and a first driving unit that connects the first gear with a driving shaft of a rare wheel via a gearbox, which stores a ratchet and a sprocket, and that shifts the back and forth movement of the wave-shaped board into one-way rolling movement by utilizing the ratchet inside the gearbox and make the driving shaft roll in one direction.

In this self-propelling vehicle, preferably, wherein the feet-pressing part is integrated with the hand-driving lever.

In this self-propelling vehicle, preferably, wherein the rear side of the wave-shaped board is connected to an elastic part that pulls the wave-shaped board to move backwardly and the front side of the wave-shaped board is connected to an elastic part that supports the wave-shaped board to move forwardly.

In this self-propelling vehicle, preferably, further comprising: a box body that has an open surface, and that stores the seat and the hand-and-leg driving unit, wherein the wave-shaped board has a convex part which protrudes to the left and right side, wherein each side of the box body forms each opening, each of which has a slit-shaped opening, and the back and forth side of the wave-shaped board pass and move through the opening, and the convex parts of the wave-shaped board move and pass through the opening to make the wave-shaped board slide back and forth.

In this self-propelling vehicle, preferably, wherein the left and right side opening comprises a bearing structure, which makes the wave-shaped board slide smoothly.

### Effects of the invention

A self-propelling vehicle comprises a seat, a leg-driving unit and a hand-driving unit. The leg-driving unit comprises a wave-shaped board that is formed with the feet-pressing part and slides back and forth according to the driver's pressing on the feet-driving part, and that has wave-shaped parts on a bottom surface; and a first gear that rotates on a rolling shaft, and that rolls according to a slide movement of the wave-shaped board back and forth by engaging the first gear with the wave-shaped parts. With this configuration, the self-propelling vehicle, with which even disabled people who require a wheelchair and elderlies can enjoy driving by themselves, can achieve higher speed than conventional vehicles.

### BRIEF DESCRIPTION OF THE DRAWINGS

Fig.1 is a perspective view of a self-propelling vehicle according to Embodiment 1.
Fig.2 is a side view of the self-propelling vehicle when it is driven.
Fig.3 is an explanation view in a state where a wave-shaped board, which is equipped with the self-propelling vehicle, is engaged with a first gear.
Fig.4 is an example perspective view of a box body which is equipped with the self-propelling vehicle.
Fig.5 is a perspective view to explain a driving mechanism using a ratchet, wherein the ratchet is equipped at the leg side or a hand side of the self-propelling vehicle.
Fig.6 is a plain view to explain the driving mechanism using the ratchet, wherein the ratchet is equipped at the leg side or a hand side of the self-propelling vehicle.
Fig.7 is a plain view to explain a driving mechanism using a ratchet, wherein the ratchet is equipped at the leg side or a hand side of a self-propelling vehicle according to a variation 1 of Embodiment 1.
Fig.8 is a perspective view showing a box body equipped with a self-propelling vehicle according to a variation 2 of Embodiment 1.
Fig.9 is a perspective view of an example of a box body equipped with a self-propelling vehicle according to Embodiment 2.

### DETAILED DESCRIPTION OF THE INVENTION

### <Embodiment 1>

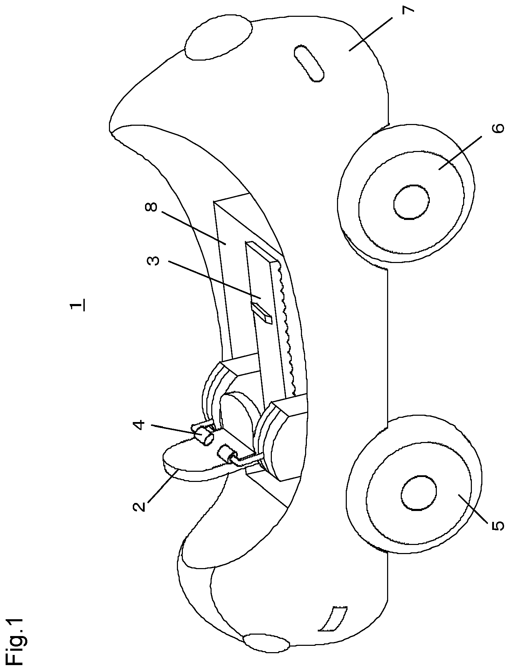

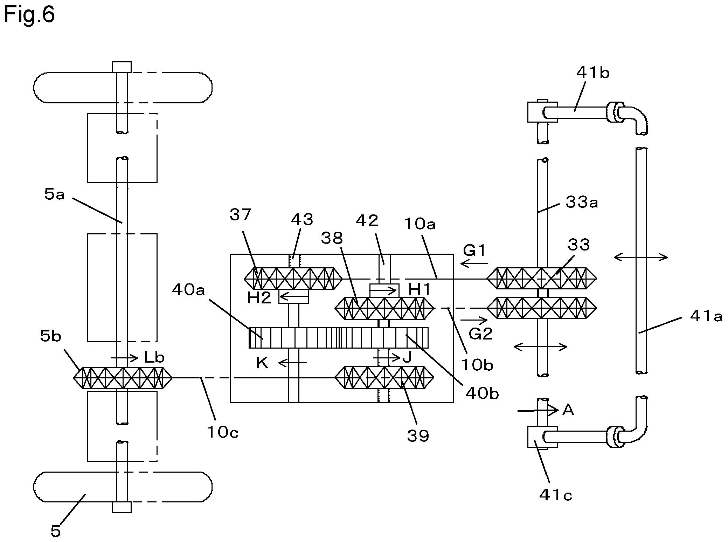

A self-propelling vehicle according to Embodiment 1 will be explained by referring to Fig. 1∼Fig. 6. As shown in Fig. 1, the self-propelling vehicle 1 comprises a seat 2 on which a driver can sit and lean; leg-driving unit 3 which can be driven by the driver's leg; hand-driving unit 4 which can be driven by the driver's hands; rare wheels (driving wheels) 5; front wheels 6; and a body part 7 which is an outer frame. The driver of this self-propelling vehicle 1 includes not only a person without any disability but also the elderly and disabled who can have a fun driving experience with this vehicle. In addition, the driver can drive by making use of either at least one of their hands or legs.

The body part 7 of the self-propelling vehicle 1 is made from resin reinforcement plastic such as FRP(Fiber-Reinforced Plastics) to realize weight reduction and low cost. In addition, the inner part of the body part 7 has a box part 8 mentioned below. Herein, a steering wheel, connected to the front wheels 6, can be equipped with the self-propelling vehicle 1. In this case, a driver can decide whether to go straight or to change directions according to his/her own will. Furthermore, a turning function, which is shown in Japanese Patent No.4718581 proposed by the same inventor of this application, can be equipped to the self-propelling vehicle 1 to change the direction left or right just by leaning the driver's body to the left or right. This turning function comprises a friction clutch, a clutch handling board, a clutch handling jig, and a break. What is more, the self-propelling vehicle 1 can equip a roof part.

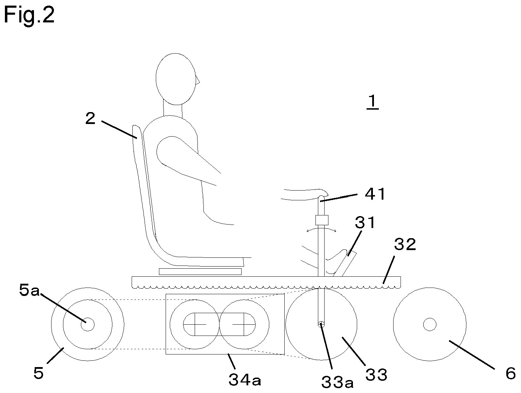

Next, a driving mechanism for a driver to drive the self-propelling vehicle 1 by making use of forces by hands and legs, will be explained by referring to Fig. 2. The self-propelling vehicle 1 comprises at least the leg-driving unit 3 and the hand-driving unit 4. The leg-driving unit 3 comprises a feet-pressing board 31, a wave-shaped board 32, a first gear 33, and a first driving unit 34. The feet-pressing board 31 is a board that is pressed by a driver. The wave-shaped board 32 is integrally formed with the feet-pressing board 31 and can slide back and forth with the driver pressing the feet-pressing board 31. The wave-shaped board 32 has uneven wave-shaped parts 32a on the bottom surface. The first gear 33 is rotatably supported on a rolling shaft 33a and can be rolled by engaging the first gear 33 with the wave-shaped parts 32a, which move back and forth along the sliding movement of the wave-shaped board 32. A first driving unit 34 connects the first gear 33 with a driving shaft 5a of the rare wheel 5 via a gearbox 34a, which stores a ratchet and a sprocket. The first driving unit 34 shifts the back and forth movement of the wave-shaped board 32 into one-way rolling movement by utilizing the ratchet inside the gearbox 34 and make the driving shaft 5a rolling in one direction.

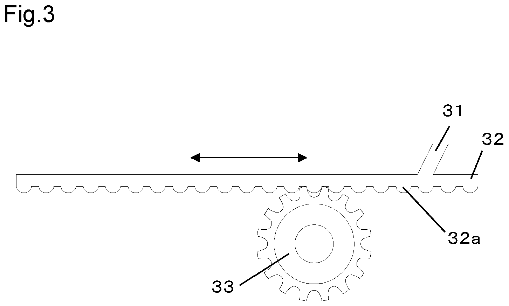

Herein, the engagement state between the wave-shaped parts 32a of the wave-shaped board 32 and the recessed parts of the first gear 33 is shown in fig.3. As shown in this figure, the first gear 33 can be rolled according to the sliding movement of the wave-shaped board 32. Herein, the first gear 33 also engages with below-mentioned chains. One of the advantages of using this wave-shaped board 32 is to widen a sliding range compared to using only hand so that it is easy to get more speed. In addition, human legs can easily give more power along with the direction of the pressing of the feet. Therefore, this configuration can optimize this power.

On the other hand, the hand-driving unit 4 comprises a hand-driving lever 41 whose lower parts are attached to the rolling shaft 33a of the first gear 33, and that rotates around the rolling shaft 33; a first gear 33 that rotates along with the movement of the hand-driving lever 41; and a first driving unit 34. Herein, the rear wheel 5 is connected to the driving shaft 5a. Thus, the rear wheel 5 is connected to the leg-driving unit 3 and the hand-driving unit 4 via the ratchet mechanism.

### <Structure of the hand-driving lever>

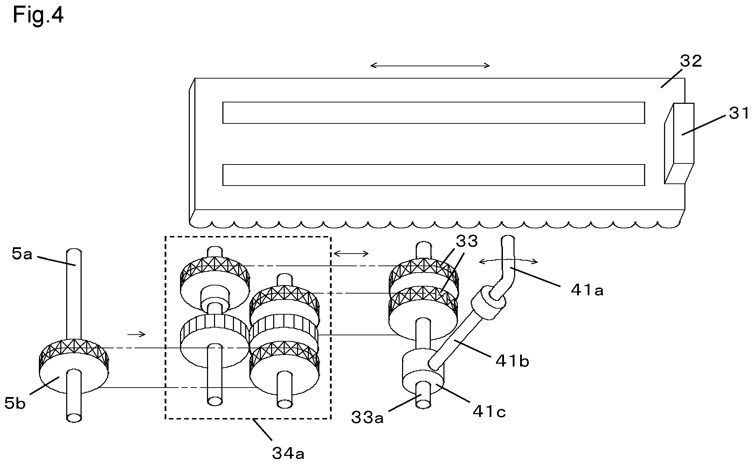

As shown in Fig. 4, the hand-driving lever 41 comprises a horizontal bar 41a, which has at least a grasping part and a vertical arm 41b, that is connected to the left or right side of the horizontal bar 41a rotatably. The ratchet 41c is located at the lower side of the vertical arm 41b and is set to have free movement along the rolling direction of the rolling shaft 33a shown as an arrow A. In other words, when the driver pushes the hand-driving lever 41, the rolling shaft 33a is set so as not to be rotated.

Furthermore, the lower side of each vertical arm 41b is connected to the driving shaft 5a of the rear wheel via the rolling shaft 33a and the ratchet mechanism in the gearbox. By pulling and pushing the grasping part of the hand-driving lever 41 by hands just like boating, the rear wheel 5 starts to roll to have a forward movement with the help of the ratchet mechanism. Herein, when the height of the hand-driving lever 41 is adjustable, the driver can drive the hand-driving lever 41 smoothly according to the height of the driver's sitting height. One way how to achieve this function is to adjust the length of the vertical arm 41b by using a screw.

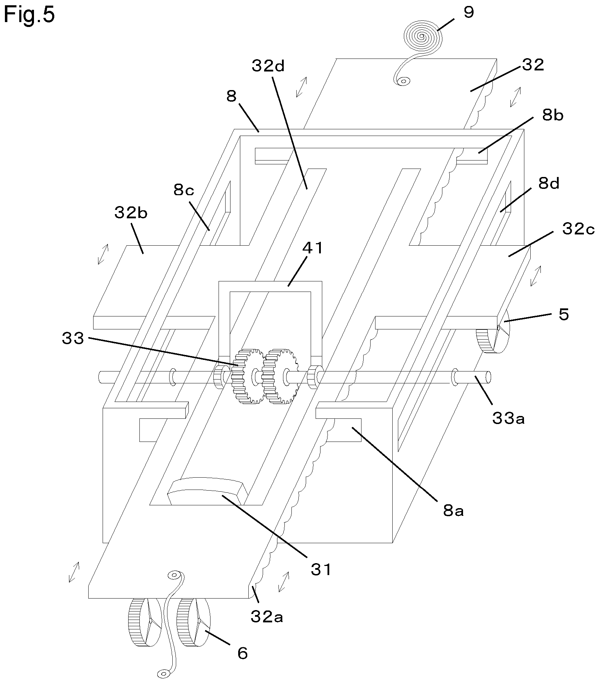

Next, the structure of the box body 8 stored inside the body part 7 of the self-propelling vehicle 1 will be explained by referring to Fig. 5. The self-propelling vehicle 1 comprises the box body 8, which has an open surface to store the seat 2, leg-driving unit 3, and the hand-driving unit 4. In addition, the wave-shaped board 32 has a convex part 32b, 32c which protrudes to the left and right side. Each side of the box body 8 forms each opening 8a∼8d, each of which has a slit-shaped opening. The back and forth side of the wave-shaped board 32 passes and move through the opening 8a, 8b, and the convex part 32b, 32c of the wave-shaped board 32 move and pass through the opening 8c, 8d so that the wave-shaped board 32 can slide back and forth.

The rare part of the wave-shaped board 32 is connected to an elastic part 9 that induces the backward movement of the wave-shaped board 32. For example, this elastic part 32 can be a spring. One side of the elastic part 9 is connected to the wave-shaped board 32, while the other side of the elastic part 9 is connected to an inside wall of the body part 7, although the inside wall of the body part 7 is not shown in any figures. For example, when the driver presses and releases the feet-pressing board 31, the wave-shaped board 32 will elastically be pulled backward by the elastic part 9. With this configuration, the driver can press the feet-pressing part 31 repeatedly and achieve more smooth driving. In other words, the driver can slide the wave-shaped board 32 back and forth just like boating and move forward with the help of the ratchet mechanism. Herein, in this Embodiment 1, the hand-driving lever 41 does not have to be connected to any elastic parts since the driver can pull on his/her own. In addition, as shown in the below-mentioned Embodiment 2, it is feasible to attach an elastic part such as a spring to the front side of the wave-shaped board 32. As a result of this, the driver can gain assistance force when pressing the wave-shaped board 32.

A slit part 32d extending along a back and forth direction is formed with the wave-shaped board 32 so as for the vertical arm 41b of the hand-driving lever 41 to pass through the wave-shaped board 32. Furthermore, the legs of the seat 2 for the driver to sit, can be penetrating through the slit part 32d. Thus, since the seat 2 of the self-propelling vehicle 1 is fixed to one position without moving back and forth, the driver without disabilities can enjoy driving as well as disabled people and elderlies while reducing physical burden.

### <Mechanism of the leg-driving unit>

Next, the detailed mechanism of the leg-driving unit 3 will be explained by referring to Fig. 6. The first gear 33 of the leg-driving unit 3 is connected to the sprocket 37 and 38 inside the gearbox 34a via the chain 10a, 10b as shown in Fig. 4. In a state when the feet-pressing board 31 is pressed by feet, the chain 10a and 10b will start to roll shown as an arrow G1. As a result, the rear wheel 5 located on both left and right sides will start to roll.

### <Mechanism inside the gearbox and Explanation of rolling direction by the hand-driving lever>

The principal of the driving force transmission inside the gearbox 34a is to shift the rounded (pushing and pulling) movement, which is created by the hand-driving lever 41, to one direction movement by making use of the ratchet 35a, 36a, the sprocket 37, 38, 39, a flat gear 40a, 40b, and an axis 42, 43. Herein, the ratchet 35a runs idle when rolling frontward (the opposite direction of an arrow H2 in Fig. 5), and the ratchet 36b runs idle when rolling backward (the opposite direction of an arrow H1 in Fig. 5).

Herein, the ratchet mechanism will be explained. Generally speaking, a ratchet mechanism is a mechanism to limit a moving direction within one side. In this embodiment, the ratchet makes the shaft roll one way in a case when the leg-driving lever and hand-driving lever is moved back and forth. Herein, since a variety of ratchet mechanisms are known, it is required to pick up the best ratchet mechanism.

Next, the forward movement of the driving device will be explained. In a case when the driver presses the feet-pressing board 31, the two first gears 33 that are engaged with the wave-shaped part 32a, which are formed on the bottom side of the wave-shaped board 32, start to roll to the same direction (the direction shown as an arrow E1) as the wave-shaped board 32 moves forward. Then the two chains 10a, 10b start to roll forward (shown as an arrow G1) and make the two sprockets 37, 38, start to roll forwardly wherein the two sprockets 37,38 are located in the gearbox 34a.

And then the force transmission direction of the ratchet 35a attached to the sprocket 37, is set to the H2 arrow direction. While the force transmission direction of the ratchet 36a, which is attached to the sprocket 38, is set to the H1 arrow direction. In this case, the sprocket 37 runs idle on the axis 43, and the sprocket 38 moves together with the axis 42 according to the arrow J direction. Then this rolling by the sprocket 38 makes the flat gear 40b roll to the arrow J direction. With this rolling, the sprocket 39 starts to roll as well as the chain 10c. As a result, the sprocket 5b, which is attached to the rear driving shaft 5a, starts to roll forward (the arrow Lb direction). In this case, the rolling of the gear 42 according to the arrow J direction in the gearbox 34a, makes the axis 43 rolls to the arrow K direction by the flat gear 40a and 40b. However, this rolling force cannot be transmitted to the sprocket 37 due to the ratchet 35a.

On the other hand, consequently, the driver starts to pull the hand-driving lever 41 and this movement makes the rolling axis 33a roll backward (the arrow E2 direction). As a result, the two first gears 33 engaged with the rolling axis 33a, start to roll in the same direction, and the two chains 10a, 10b start to roll backwardly (the arrow G2 direction), and then the two sprockets 37, 38 in the gearbox 34a start to roll in a backward direction. And the driver starts to pull (leave) the feet-pressing board 31, and then the wave-shaped board 32 starts to move backward caused by the force from the spring 9. In this case, the two first gear 33 engaged with the wave-shaped part 32a, which is formed on the bottom side of the wave-shaped board 32, make the two chain 10a, 10b start to roll backward (the arrow G2 direction) and make the two sprockets 37, 38 in the gearbox 34a start to roll backwardly.

In this case, as mentioned above, since the force transmission direction of the ratchet 35a attached to the sprocket 37 is set to the H2 arrow direction, and the force transmission direction of the ratchet 36a, which is attached to the sprocket 38, is set to the H1 arrow direction, the sprocket 37 moves together with the axis 43 according to the arrow K direction and the sprocket 38 runs idle due to the ratchet 36a. On the other hand, the axis 42 of the sprocket 39 rolls in a forward direction by the force from the sprocket 37, the axis 43 which rolls in an arrow K direction, the flat gear 40a, 40b, also the axis 42 makes the driving shaft 5a of the rear wheel 5 roll in a forward direction (Lb direction) via the chain 10c. With this configuration, the back and forth movement of the hand-driving lever 41 makes the driving shaft 5a of the rear wheel 5 roll in a forward direction.

As mentioned above, the back and forth force movement exerted to move the hand-driving lever 41 and the feet-pressing board 31 can be shifted to the advanced rolling of the rear wheel 5. This results in increasing the speed of the self-propelling vehicle 1.

Herein, the mechanism to shift the gear structure in the gearbox 34a and the back and force movement to the one way (advancement) rolling force is shown in Fig. 6. However, in a case when the ratchet 35a, 36a is set conversely, the force transmission by the sliding movement of the wave-shaped board 32 in the gearbox 34a will converse and the driving shaft 5a of the rear wheel 5 starts to roll conversely and move backwardly. In other words, in a case when the ratchet 35a, 36a attached to the sprocket 37, 38 is set conversely, the sprocket 39 starts to roll conversely compared to the above-mentioned case. This results in making the self-propelling vehicle 1 move backwardly.

As mentioned above, the self-propelling vehicle 1 according to Embodiment 1 comprises the seat 2, the leg-driving unit 3 and the hand-driving unit 4. The leg-driving unit 3 comprising: a feet-pressing part 31 that is pressed by the driver; a wave-shaped board 32 that is formed with the feet-pressing part 31 and slides back and forth according to the driver's pressing on the feet-driving part 31, and that has wave-shaped parts 32a on a bottom surface; a first gear 33 that rotates on a rolling shaft 33a, and that rolls according to a slide movement of the wave-shaped board 32 back and forth by engaging the first gear 33 with the wave-shaped parts 32a; and a first driving unit 34 that connects the first gear 33 with a driving shaft 5a of a rare wheel 5 via a gearbox 34a, which stores a ratchet 35a,36a and a sprocket 37,38,39, and that shifts the back and forth movement of the wave-shaped board 32 into one-way rolling movement by utilizing the ratchet 35a,36a inside the gearbox 34a and make the driving shaft 5a roll in one direction. The hand-driving unit 4 comprising: a hand-driving lever 41 whose lower parts are attached to the rolling shaft 33a of the first gear 33, and that rotates around the rolling shaft 33a; the first gear 33 that rotates along with the movement of the hand-driving lever 41; and the first driving unit 34. With this configuration, in the form of boating, the driver can advance the self-propelling vehicle 1 by utilizing the force when pulling the hand-driving lever 41 and pressing the feet-pressing board 31. The driver can apply the whole body force to the self-propelling vehicle 1 and have the whole-body exercise. In other words, legs can cause more force when pressing (especially in the form of boating) and hands can cause more force when pulling. This invention can make use of these forces by coordinating hand movement with leg movement. As a result, the driver can achieve more speed and can enjoy driving the vehicle 1 just like a bicycle. In addition, the elderly and a person on a diet can ride this vehicle 1 without any hesitations.

Furthermore, since the wave-shaped board 32 slides back and forth, the wider the slide range of the wave-shaped board 32 has, the more rolling the gear 33 has. As a result, this makes the vehicle 1 have more speed. In addition, in a case when the spring 9 is set to the rear part of the wave-shaped board 32, the vehicle 1 can move forward just by leg pressing force. It is not necessary for the spring 9 to have a strong elastic force since the pulling force from the spring 9 and the pulling force from the hand-driving lever 41 are mixed. Furthermore, it is possible for the driver to advance the self-propelling vehicle 1 just by using the force from the legs and to drive the vehicle 1 by a hand wheel.

In addition, just by driving the hand-driving lever 41 by hands and the feet-pressing board 31 by feet like boating, the driver can achieve a driving experience utilizing a ratchet mechanism and drive forward the self-propelling vehicle 1 in a comfortable posture. Furthermore, a ratchet mechanism has merits, one of which is an easy mechanism and does not cost a lot, and is light in weight. In addition, it is possible to even for elderly people and physically impaired persons with less ability to grip things to drive the vehicle 1 safely by making use of either one of hands or legs. In other words, a person with less leg ability can drive using only hands. While, a person with less hand ability can drive only by legs. Furthermore, the driver can drive the vehicle 1 just by legs when the driver feels tired of using their hands. It is feasible to have a comfortable drive by changing hands and legs one another.

### (Variation 1)

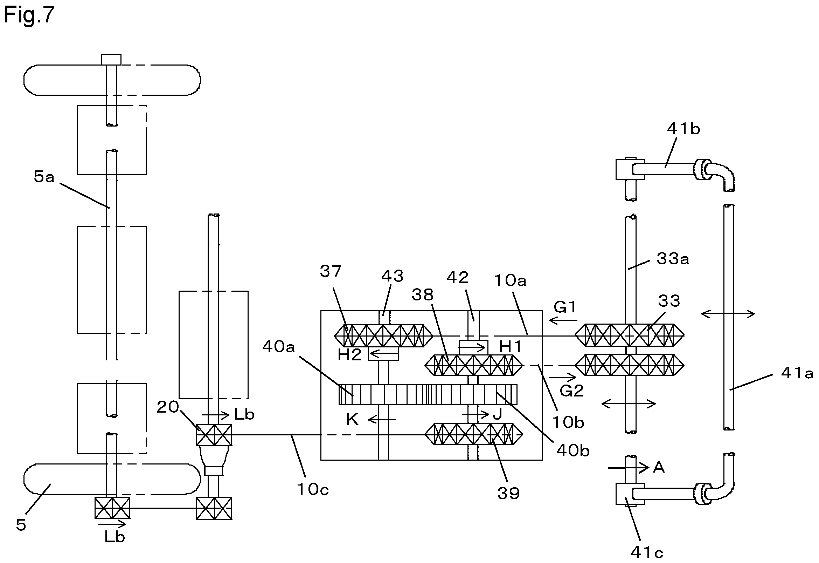

The variation 1 of Embodiment 1 will be explained by referring to Fig.7. In this variation 1, the vehicle 1 comprises an internal transmission 20 (gear) beside the rear wheel 5. With this configuration, it is feasible for the driver to drive the vehicle 1 smoothly and to achieve the same effects as Embodiment 1.

### (Variation 2)

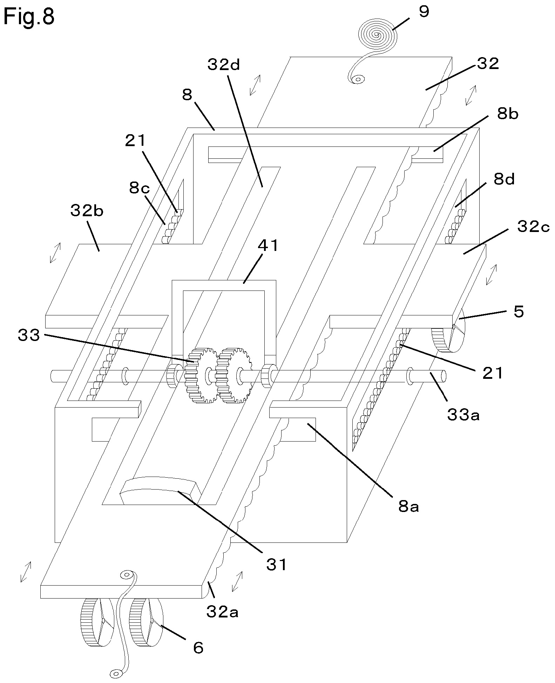

The variation 2 of Embodiment 1 will be explained by referring to Fig.8. In this variation 2, the vehicle 1 comprises a bearing structure 21 on an inner side of the opening 8c, 8d of the box body 8 to make the convex part 32a, 32b of the wave-shaped board 32 slide smoothly. With this configuration, it is feasible for the driver to drive the vehicle 1 smoothly and to achieve the same effects as Embodiment 1.

### (Embodiment 2)

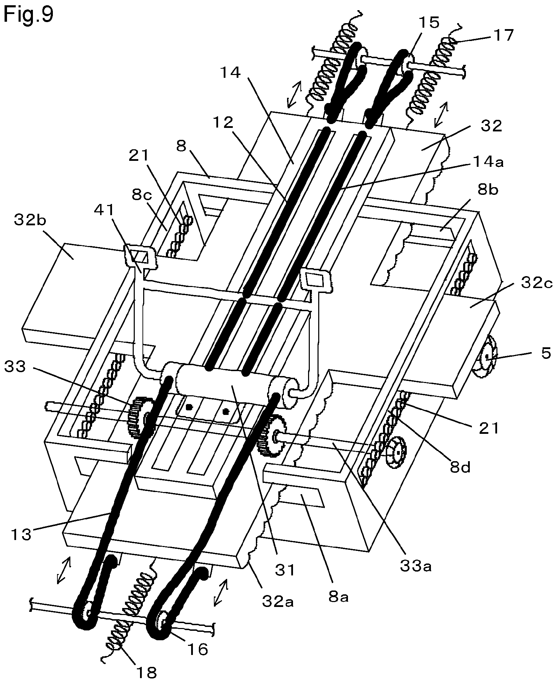

Embodiment 2 according to this invention will be explained by referring to Fig.9. Herein, the same configurations in the above-mentioned Embodiment 1 will be given the same numerical references and detailed explanation of the configurations will be omitted. The self-propelling vehicle 1 according to Embodiment 2 comprises a seat where the driver sits and a hand-and-leg driving unit 11.

As shown in Fig.9, this hand-and-leg driving unit 11 comprises a feet-pressing part 31, a hand-driving lever 41, a wave-shaped board 32, a first rope 12, a second rope 13, a leg rope housing board 14, a first gear 33, and a first driving unit 34. In this embodiment 2, the feet-pressing part 31 is integrated with the hand-driving lever 41.

One side of the first rope 12 is connected to the feet-pressing part 31 and the other side of the first rope 12 is connected to a rear part of the wave-shaped board 32 via a first pulley 15, situated at the backside of the wave-shaped board 32. One side of the second rope 13 is connected to the hand-driving lever 41 and the other side of the second rope 13 is connected to a front part of the wave-shaped board 32 via a second pulley 16, situated at the front side of the wave-shaped board 32. Herein, the first pulley 15 and the second pulley 16 are the parts to lead the rope direction to an opposite direction. The leg rope housing board 14 is another part of the wave-shaped board 32 and is fixed to the upper surface of the box body 8 and has an inner space 14a to store the first rope 12. The wave-shaped board 32 can slide back and forth according to the driver's pressing operation onto the feet-pressing part 31 and pulling operation on the hand-driving lever 41.

The rear side of the wave-shaped board 32 is connected to a spring 17 (elastic part) that pulls the wave-shaped board 32 to move backwardly. The front side of the wave-shaped board 32 is connected to a spring 18 (elastic part) that supports the wave-shaped board 32 to move forwardly. Herein, the one side of the spring 17, 18 is connected to the wave-shaped board 32 and the other side of the spring 17, 18 is connected to an inner wall of the body part 7 and so on, wherein the inner wall is not shown in any figures.

The self-propelling vehicle 1 has an open ceiling and comprises at least the seat 2 and a box body 8, which stores the hand-and-leg driving unit 11. Each side of the box body 8 forms openings 8a∼8d, each of which has a slit-shaped opening. The back and forth side of the wave-shaped board 32 passes and move through the opening 8a, 8b, and the convex part 32b, 32c of the wave-shaped board 32 moves and pass through the opening 8c, 8d so that the wave-shaped board 32 can slide back and forth. The left and right side opening 8c, 8d comprises a bearing structure 21, which makes the wave-shaped board 32 slide smoothly.

With this configuration, in a state where the driver grasps and pulls the hand-driving lever 41, the hand-and-leg driving unit 11 can make the wave-shaped board 32 slide back and forth smoothly. In addition, in a state where the driver presses the feet-pressing part 31, the driver can easily make the wave-shaped board 32 slide back and forth. Herein, the mechanism of rolling the rear wheel 5 and moving the self-propelling vehicle 2 forward with the ratchet mechanism, which utilizes the coordination of the first gear 33 and the first driving unit 34 after the sliding of the wave-shape board 32, is the same as the above-mentioned Embodiment 1. Therefore, the detailed explanation about said mechanism is omitted.

As mentioned above, the self-propelling vehicle 1 according to Embodiment 2 comprises the pulley 15, 16, the spring 17, 18 and the rope 12, 13. With this configuration, the wave-shaped board 32 slides forwardly by pulling the hand-driving lever 41 (the second rope 13) and slides backwardly by loosening the lever 41. The wave-shaped board 32 slides forwardly by pressing the feet-pressing part 31 (the first rope 12) and slides backwardly by loosening the leg force on the feet-pressing part 31. Thus, in this Embodiment 2, the spring 17, 18 can prevent the rope 12, 13 from loosening and support the coordinating movement of hands and legs for a fun driving. For example, since the wave-shaped board 32 can be pulled backwardly by the spring 17 when loosening the hand-driving lever 41, limb impaired people can drive the vehicle 1 just by pulling the second rope 13 and loosening the second rope 13, repeatedly.

It is to be noted that the present invention is not limited to the above-described embodiments and modified examples, and various modifications are possible within the spirit and scope of the present invention. For example, the propelling vehicle 1 can comprise a break, in order for a driver to stop the vehicle 1 using their own hands or feet. In addition, the hand-driving lever 41 can have a bending part. The self-propelling vehicle 1 can comprise an electronic engine, which drives the vehicle 1 when the driver feels tired of driving on his/her own.

### Numerical References

1 self-propelling vehicle
2 seat
3 leg-driving unit
4 hand-driving unit
5 rear wheel (driving wheel)
5 a driving axis
6 front wheel
7 body part
8 box body
8a∼8d opening
9 elastic part (spring)
11 hand-and-leg driving unit
12 first rope
13 second rope
14 leg rope housing board
15 first pulley
16 second pulley
17, 18 elastic part (spring)
20 internal transmission
21 bearing structure
31 feet-pressing board
32 wave-shaped board
32a wave-shaped part
32b, 32c convex part
33 first gear
33a rolling shaft
34 first driving unit
34 a gearbox
35a, 36a, 41c ratchet
37, 38, 39 sprocket
40a, 40bflat gear
41 hand-driving lever
41a horizontal bar
41b vertical arm

## Claims

1. A self-propelling vehicle, which comprises a seat for a driver, a leg-driving unit to be driven by the driver's leg force, and a hand-driving unit to make the self-propelling vehicle move by the driver's hand force,
wherein the leg-driving unit comprising:
a feet-pressing part that is pressed by the driver;
a wave-shaped board that is formed with the feet-pressing part and slides back and forth according to the driver's pressing on the feet-driving part, and that has wave-shaped parts on a bottom surface;
a first gear that rotates on a rolling shaft, and that rolls according to a slide movement of the wave-shaped board back and forth by engaging the first gear with the wave-shaped parts; and
a first driving unit that connects the first gear with a driving shaft of a rare wheel via a gearbox, which stores a ratchet and a sprocket, and that shifts the back and forth movement of the wave-shaped board into one-way rolling movement by utilizing the ratchet inside the gearbox and make the driving shaft roll in one direction,
wherein the hand-driving unit comprising:
a hand-driving lever whose lower parts are attached to the rolling shaft of the first gear, and that rotates around the rolling shaft;
the first gear that rotates along with the movement of the hand-driving lever; and
the first driving unit,
the self-propelling vehicle, further comprising:
a box body that has an open surface, and that stores the seat, the leg-driving unit, and the hand-driving unit,
wherein the wave-shaped board has a convex part which protrudes to the left and right side,
wherein each side of the box body forms each opening, each of which has a slit-shaped opening, and the back and forth side of the wave-shaped board pass and move through the opening, and the convex parts of the wave-shaped board move and pass through the opening to make the wave-shaped board slide back and forth.

2. The self-propelling vehicle according to claim 1,
wherein the rear side of the wave-shaped board is connected to an elastic part that pulls the wave-shaped board to move backwardly.

3. The self-propelling vehicle according to claim 1,
wherein the left and right side opening comprises a bearing structure, which makes the wave-shaped board slide smoothly.

4. The self-propelling vehicle according to one of claim 1 to 3, wherein the hand-driving lever comprises a horizontal bar having a grasping part and a vertical arm connected to the left or right side of the horizontal bar rotatably,
wherein the lower side of the vertical arm is connected to the rolling shaft,
wherein the wave-shaped board has a slit part extending along a back and forth direction to make the vertical arm of the hand-driving lever pass through the wave-shaped board.

5. The self-propelling vehicle according to claim 4,
wherein the ratchet is located at the lower side of the vertical arm and is set to have free movement along the rolling direction of the rolling shaft.

6. The self-propelling vehicle according to one of claim 1 to 5, further comprising:
a steering wheel that is connected to front wheels, and that operates the self-propelling vehicle going straight or changing directions.

7. The self-propelling vehicle according to one of claim 1 to 5, further comprising:
an internal transmission, which is located between the gearbox and the driving shaft, that controls a transmission of the driving force.

8. The self-propelling vehicle according to claim 4,
wherein the legs of the seat for the driver to sit is penetrating through the slit part.

9. A self-propelling vehicle which comprises a seat for a driver and a hand-and-leg driving unit to make the self-propelling vehicle move by the driver's hand and leg forces,
wherein the hand-and-leg driving unit comprising:
a feet-pressing part that is pressed by the driver;
a hand-driving lever that transmits force by hands;
a wave-shaped board that slides back and forth according to the driver's pressing operation onto the feet-pressing part and pulling operation on the hand-driving lever, and that has wave-shaped parts on a bottom surface;
a first rope where one side of the first rope is connected to the feet-pressing part and the other side of the first rope is connected to a rear part of the wave-shaped board via a first pulley situated at the backside of the wave-shaped board;
a second rope where one side of the second rope is connected to the hand-driving lever and the other side of the second rope is connected to a front part of the wave-shaped board via a second pulley situated at the front side of the wave-shaped board;
a leg rope housing board that is another part of the wave-shaped board, and that has an inner space to store the first rope;
a first gear that rotates on a rolling shaft, and that rolls according to a slide movement of the wave-shaped board back and forth by engaging with the wave-shaped parts; and
a first driving unit that connects the first gear with a driving shaft of a rare wheel via a gearbox, which stores a ratchet and a sprocket, and that shifts the back and forth movement of the wave-shaped board into one-way rolling movement by utilizing the ratchet inside the gearbox and make the driving shaft roll in one direction.

10. The self-propelling vehicle according to claim 9,
wherein the feet-pressing part is integrated with the hand-driving lever.

11. The self-propelling vehicle according to claim 9 or 10, wherein the rear side of the wave-shaped board is connected to an elastic part that pulls the wave-shaped board to move backwardly and the front side of the wave-shaped board is connected to an elastic part that supports the wave-shaped board to move forwardly.

12. The self-propelling vehicle according to one of claim 9 to 11, further comprising:
a box body that has an open surface, and that stores the seat and the hand-and-leg driving unit,
wherein the wave-shaped board has a convex part which protrudes to the left and right side,
wherein each side of the box body forms each opening, each of which has a slit-shaped opening, and the back and forth side of the wave-shaped board pass and move through the opening, and the convex parts of the wave-shaped board move and pass through the opening to make the wave-shaped board slide back and forth.

13. The self-propelling vehicle according to claim 12,
wherein the left and right side opening comprises a bearing structure, which makes the wave-shaped board slide smoothly.
